(19) Europäisches Patentamt
European Patent Office
Office européen des brevets

(11) **EP 1 298 092 A1**

(12) **EUROPÄISCHE PATENTANMELDUNG**

(43) Veröffentlichungstag:
**02.04.2003 Patentblatt 2003/14**

(51) Int Cl.$^7$: **C01G 3/00**, C01G 3/02

(21) Anmeldenummer: **02018881.9**

(22) Anmeldetag: **24.08.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **16.10.2001 DE 10151060**
**28.09.2001 DE 10148145**

(71) Anmelder: **Spiess -Urania Chemicals GmbH**
**20097 Hamburg (DE)**

(72) Erfinder:
• **Ploss, Hartmut, Dr.**
**22301 Hamburg (DE)**
• **Goebel, Gerhard**
**25524 Itzehoe (DE)**
• **Simon, André**
**D-22081 Hamburg (DE)**

(74) Vertreter: **Klickow, Hans-Henning**
**Patentanwälte**
**Hansmann-Klickow-Hansmann**
**Jessenstrasse 4**
**22767 Hamburg (DE)**

(54) **Kontrollierte Morphogenese von Kupfersalzen**

(57) Bei einem Verfahren zur Herstellung von Kupfersalzen aus wenigstens je einem kupferhaltigen und einem weiteren Reaktanden werden aus den Reaktanden unter Verwendung wenigstens eines Blockpolymers Miniemulsionen hergestellt, die so erhaltenen Zwischenprodukte werden vermischt und zur Bildung einer Miniemulsion miteinander zur Reaktion gebracht. Die Herstellung der Ausgangs-Miniemulsionen sowie die anschließende gemeinsame Reaktion erfolgen dabei vorzugsweise entweder unter Ultraschall oder aber in einem Hochdruckhomogenisator. Die so erhaltenen Kupfersalze weisen eine Teilchengröße von weniger als 50 Nanometern, vorzugsweise 5 bis 20 Nanometern, auf und können durch eine gezielte Zudotierung von Fremdionen auf spezielle Anwendungsfälle eingestellt werden.

**Beschreibung**

Die Erfindung betrifft ein Verfahren zur Herstellung von Kupfersalzen aus wenigstens je einem kupferhaltigen und einem weiteren Reaktanden. Ferner betrifft sie ein nach diesem Verfahren hergestelltes Kupfersalz.

Die Herstellung kristalliner Kupfersalze, wie beispielsweise Kupferhydroxid ($Cu(OH)_2$), Kupfer-(I)-oxid ($Cu_2O$), Kupfer-(II)-oxid ($CuO$), basisches Kupfercarbonat ($CuCO_3$ x $Cu(OH)_2$ x $H_2O$) oder basisches Kupfernitrat ($Cu(NO_3)_2$ x 3 $Cu(OH)_2$ x 2 $H_2O$) sowie von Mischsalzen, wie beispielsweise Kupferoxychlorid ($CuCl_2$ x 3 $Cu(OH)_2$ und basisches Kupfersulfat ($CuSO_4$ x 3 $Cu(OH)_2$) erfolgt in der Regel entweder durch oxidative Laugung von metallischem Kupfer oder durch eine stöchiometrische chemische Umsetzung löslicher Kupfersalze mit der entsprechenden Lauge und/oder durch Folgereaktionen der entstehenden feindispersen Substanzen.

Ein Beispiel für eine oxidative Laugung ist die Herstellung von Kupferoxychlorid gemäß der Reaktion:

$$4\ Cu + 2\ CuCl_2 + 2HCl + \tfrac{1}{2}\ O_2 \rightarrow 6\ CuCl + H_2O$$

$$6\ CuCl + 1\tfrac{1}{2}\ O_2 + 3\ H_2O \rightarrow 3\ Cu(OH)_2\ x\ CuCl_2 + 2\ CuCl_2$$

Beispiele chemischer Umsetzungen löslicher Kupfersalze sind die Herstellung von Kupferhydroxid gemäß den nachfolgenden Verfahren:

$$1.\qquad CuSO_4 + Na_3PO_4 \rightarrow CuNaPO_4 + Na_2SO_4$$

$$CuNaPO_4 + 2\ NaOH \rightarrow Cu(OH)_2 + Na_3PO_4,$$

$$2.\qquad 3\ Cu(OH)_2\ x\ CuCl_2 + 2\ NaOH \rightarrow 4\ Cu(OH)_2 + 2\ NaCl,$$

$$3.\qquad 3\ Cu + 1{,}5\ O_2 + 3\ H_2O \rightarrow 3\ Cu(OH)_2.$$

Weitere derartige Beispiele sind die Herstellung von basischem Kupfercarbonat gemäß

$$2\ Cu(OH)_2 + CO_2 \rightarrow CuCO_3\ x\ Cu(OH)_2\ x\ H_2O,$$

von basischem Kupfernitrat gemäß

$$4\ Cu(OH)_2 + 2\ HNO_3 \rightarrow Cu(NO_3)_2\ x\ 3\ Cu(OH)_2\ x\ 2\ H_2O$$

und der sogenannten Bordeaux-Mischung gemäß einer der Reaktionen

$$CuSO_4 + Ca(OH)_2 \rightarrow$$

$$\text{(bei Überschuß an } CuSO_4)\ 4\ CuO\ x\ SO_3\ x\ 3\ H_2O\ x\ 3\ CaSO_4$$

$$\text{(bei Überschuß an } Ca(OH)_2)\ [Ca(OH)_2]_3 CuSO_4.$$

Die bei diesen Reaktionen entstehenden Kupfersalze weisen in der Regel Teilchengrößen zwischen einem und etwa 10 Mikrometern ($\mu m$) und eine Teilchenoberfläche von einem bis etwa 10 $m^2/g$ auf. Die entstehende Kristallstruktur ist abhängig von der chemischen Zusammensetzung und, bis zu einem gewissen Grad, vom Herstellungsverfahren. So liegen die Kristalle des nach dem Verfahren 2 hergestellten Kupferhydroxids üblicherweise in Nadelform vor, die Kristalle des mittels oxidativer Laugung gemäß dem ersten angegebenen Verfahren hergestellten Kupferoxychlorids liegen in Oktaederform vor.

Der biologisch aktive Anteil solcher Kupferverbindungen ist das aus diesen wasserunlöslichen Salzen freisetzbare Kupferion, das über einen natürlichen, sogenannten Slow-Release-Prozeß dem zu schützenden Medium, beispielsweise Pflanzen, Holz oder Wasser zur Verfügung steht. Im Falle eines fungiziden und bakteriziden Einsatzes derartiger Verbindungen bei Pflanzen wird die jeweilige Kupfersalzverbindung auf die Blattoberfläche gespritzt, so daß ein Film von Kupfersalzpartikeln die Blattoberfläche bedeckt.

Durch eine Verringerung der Teilchengröße der Kupfersalzpartikel ist es möglich, bei mindestens gleichbleibender Wirkung, die pro Blattoberfläche aufzubringende Menge an Kupfersalz zu reduzieren. Eine Möglichkeit, dies zu erreichen, besteht in einer gezielten Steuerung der Herstellungsbedingungen, speziell der Temperaturen und Konzentrationen der beteiligten Substanzen. Hierdurch kann die Teilchengröße von 50 auf etwa 10 μm, gegebenenfalls bis auf etwa 1 bis 3 μm, gesenkt werden. Damit wird erreicht, daß beispielsweise die Wirksamkeit gegenüber speziellen Pilzen von bisher 80 % auf 100 % gesteigert werden kann oder aber daß bei einer bereits hundertprozentigen Wirksamkeit gegenüber speziellen Pilzen diese erhalten bleibt, gleichzeitig aber die Aufwandmenge an Kupfersalz pro Hektar reduziert werden kann.

Der Erfindung liegt die Aufgabe zugrunde, ein Verfahren der eingangs genannten Art so auszubilden, daß es die Herstellung von Kupfersalzen mit einer möglichst geringen Teilchengröße ermöglicht. weiterhin ist es Aufgabe der Erfindung, Kupfersalze bereitzustellen, die aufgrund ihrer Eigenschaften neue bzw. verbesserte Einsatzmöglichkeiten eröffnen.

Die Erfindung löst die erste Aufgabe durch ein Verfahren, bei dem aus den beiden Reaktanden unter Verwendung wenigstens eines Blockpolymers Miniemulsionen hergestellt werden und bei dem die so erhaltenen Zwischenprodukte miteinander vermischt und zur Bildung einer Miniemulsion miteinander zur Reaktion gebracht werden. Die Herstellung der Ausgangs-Miniemulsionen sowie die anschließende gemeinsame Reaktion erfolgen dabei vorzugsweise entweder unter Ultraschall oder aber in einem Hochdruckhomogenisator.

Die Lösung der weiteren Aufgabe erfolgt durch ein Kupfersalz, bei dem die Größe der Primärteilchen unterhalb von 50 Nanometern, vorzugsweise zwischen 5 und 20 Nanometern liegt.

Das Verfahren gemäß der Erfindung macht dabei Verwendung von an sich bekannten Techniken der Herstellung von Miniemulsionen, wie sie bereits zur Herstellung von Polymerpartikeln angewendet werden und wie sie beispielsweise in der Literaturstelle K. Landfester, M. Willert und M. Antonietti, "Preparation of Polymer Particles in Nonaqueous Direct and Inverse Miniemulsions" in der Zeitschrift Macromolecules, Band 33, 2000, Seiten 2370 - 2376, beschrieben sind. Das erfindungsgemäße Verfahren läuft dabei unter Einbeziehung der synthetischen Blockpolymeren und deren chemischer Umsetzung in Form von Nanoreaktoren ab. Dazu werden zunächst aus den Reaktanden entweder mittels Ultraschall oder aber in einem Hochdruckhomogenisator unter Verwendung eines Block-Copolymeren Zwischenprodukte in Form von Miniemulsionen hergestellt, die miteinander vermischt und anschließend nochmals gemeinsam unter Ultraschall bzw. im Hochdruckhomogenisator zur Reaktion gebracht werden, wobei jede Mizelle als ein unabhängiger Nanoreaktor fungiert.

Die Erfindung nutzt dabei den schon beschriebenen Einfluß der Teilchengröße auf die Produkteigenschaften aus, indem sie Kupfersalze mit Teilchengrößen im Nanometerbereich bereitstellt. Im Bereich dieser Teilchengröße werden sowohl in der belebten wie auch in der unbelebten Natur charakteristische Funktions-Eigenschafts-Relationen ausgebildet. Auch befinden sich in diesem Größenbereich eigenschaftsbestimmende Organisationseinheiten biologischer Systeme.

Die Kupfersalze gemäß der Erfindung sind auf zwei Wegen herstellbar: Entweder durch die Reaktion von löslichen Salzen, zum Beispiel $CuCl_2$ oder $Cu(NO)_3$, mit Laugen zur Erzeugung einer basischen Kupferverbindung, wobei die Edukte als Lösungen vorliegen, oder aber durch den Einsatz von dispersem Agglomerat als Zwischenprodukt, zum Beispiel durch die Reaktion von festem $Cu(OH)_2$/NaCl-Agglomerat, das durch das erfindungsgemäß vorgesehene Mikroemulsionsverfahren erhalten wird und bei der Herstellung von $Cu_2O$ in dieser Mehrphasenreaktion von $Cu^{2+}$ zu $Cu^+$ reduziert wird.

Bei dem erfindungsgemäßen Verfahren entstehen in jedem der Nanoreaktoren unlösliche Kupferverbindungen der gewünschten Zusammensetzung. Aufgrund dieser Art der Umsetzung besteht ein wesentlicher Vorteil des Verfahrens gemäß der Erfindung darin, daß die benötigte Menge an stabilisierenden Blockpolymeren äußerst gering ist. Bei vergleichsweise kleinen Additivmengen sind kleinste Teilchen und hohe Umsetzungsraten erzielbar. Die bei der Miniemulsionstechnik verwendeten, bei den speziellen chemischen Reaktion entstehenden wasserlöslichen Salze, beispielsweise Natriumchlorid oder Natriumsulfat, füllen die Zwischenräume von tropfenartig agglomerierenden Gebilden aus. Die Salzmenge hängt dabei vom jeweiligen Prozeß ab. Diese Agglomerate in einer Größenordnung von etwa 200 Nanometern (nm) bestehen aus einer Vielzahl von Primärpartikeln in einer Größenordnung von 5 bis 20 nm. Aufgrund ihrer Zusammensetzung zerfallen diese Agglomerate am gewünschten Anwendungsort.

Die mit dem erfindungsgemäßen Verfahren hergestellten wasserunlöslichen Kupfersalze besitzen aufgrund Ihrer im Nanometerbereich liegenden Teilchengröße überraschende neue Eigenschaften, durch die sie sich von existierenden wasserunlöslichen Kupfersalzen, deren Teilchengrößen im Mikrometerbereich liegen, deutlich unterscheiden. Aufgrund dieser neuartigen Eigenschaften ergeben sich neue und verbesserte Anwendungen und wesentliche Vorteile in den verschiedensten Bereichen, von denen einige nachfolgend aufgeführt werden.

Im Bereich fungizider und biozider Substanzen wird die biologische Aktivität, bezogen auf Aufwandmenge pro Hektar, in einem solchen Maße erhöht, daß eine signifikante Reduzierung der eingesetzten Kupfersalzmengen möglich wird.

Dadurch kann der Kupfereintrag in die Umwelt in die Nähe des tatsächlichen Kupferverbrauchs der Pflanzen gebracht werden, so daß praktisch keine Umweltbelastung auftritt.

Im Holzschutzbereich können die nach dem erfindungsgemäßen Verfahren hergestellten Kupferverbindungen aufgrund ihrer quasi atomaren Größe ohne die sonst erforderliche Druckimprägnierung tief in die Holzschichten eindringen und somit einen verlängerten Schutz gegen diverse Organismen gewährleisten.

Im technischen Bereich ergeben sich aufgrund einer signifikanten Erhöhung der Partikeloberflächen von bisher etwa 1 bis 10 $m^2$/g auf nunmehr etwa 400 $m^2$/g Kupferverbindungen mit völlig neuen Eigenschaften, durch die sich beispielsweise die Katalysatoraktivität um Größenordnungen steigern läßt.

Schließlich wird durch die Verwendung von Kupfer-(I)-oxid-Partikeln im Nanometerbereich die Herstellung von Antifoulingfarben ermöglicht, die ein gezieltes und reduziertes Abgabeverhalten von Kupferionen aufweisen und damit wesentlich umweltfreundlicher als die bisher in diesem Bereich verwendeten Farben sind.

Der gemäß der Erfindung vorgesehene Schritt der Herstellung von Mikroemulsionen ermöglicht darüber hinaus eine gezielte Dotierung der entstehenden Nanopartikel mit fremden Ionen. Während bei herkömmlichen chemischen Reaktionen die Umsetzung jedes Anions oder Kations eine eigene chemische Umsetzung darstellt, was eine fraktionierte Produktentstehung und damit eine Trennung der einzelnen Salze auslöst, ergibt sich bei dem Verfahren nach der Erfindung eine gleichmäßige Dotierung. Dadurch ist es möglich, gezielt sekundäre Eigenschaften einzustellen, die durch die zudotierten Ionen bestimmt werden. Zudotiert werden können dabei im Prinzip alle Anionen und Kationen.

Die Formulierung der erfindungsgemäßen Kupferverbindungen im Nanometerbereich geschieht dabei, entsprechend dem Anwendungszweck, auf bereits bekannte Weise.

Nachfolgend soll die Erfindung anhand eines Ausführungsbeispiels näher erläutert werden.

50 g CuCl$_2$ Lösung werden mit einem bis 10 g, vorzugsweise 4 g, eines Polyethylenoxid-Blockpolymers und einem organischen Lösungsmittel, im Fall des hier beschriebenen Ausführungsbeispiels 2,2,4-Trimethylpentan, emulgiert. Letzteres kann entweder durch Ultraschallbehandlung oder aber mittels Hochdruckhomogenisation erfolgen. Als organisches Lösungsmittel sind anstelle von 2,2,4-Trimethylpentan insbesondere auch Cyclohexan, Rapsöl und Isopropylpalmitat geeignet.

Die Herstellungsdauer der Miniemulsion wird anhand von Trübungsmessungen geregelt. Sie erfordert bei basischen Ingredienzen eine speziell terminierte Prozeßführung, die die Hydrolyse der Fette unterbindet. Bei dem hier beschriebenen Ausführungsbeispiel beträgt die Reaktionszeit etwa 120 Sekunden.

Weiterhin werden 17,5 g Natriumhydroxid in 29 ml Wasser gelöst und ebenfalls mit einem Blockpolymer und einem Lösungsmittel, wie vorangehend beschrieben, miniemulgiert.

Die beiden Miniemulsionen werden anschließend vermischt und mittels erneuter Ultraschallbehandlung bzw. Hochdruckhomogenisation chemisch umgesetzt. Das auf diese Weise erhaltene Produkt ist monodispers und stabil. Es kann in dieser Zusammensetzung ohne weitere Aufarbeitung direkt zu einem flüssigen Endprodukt formuliert werden. Zur Herstellung einer trockenen Formulierung wird die so erhaltene Miniemulsion getrocknet, wobei dies vorzugsweise unter Vakuum erfolgt.

Die Charakterisierung mittels Röntgendiffraktometrie und Rasterelektronenmikroskopie ergibt bei dem hier beschriebenen Ausführungsbeispiel Teilchengrößen zwischen 10 und 50 Nanometern (nm) und Agglomeratgrößen zwischen 100 und 300 nm. Das Material weist eine produktspezifische Oberfläche von BET 390 $m^2$/g auf, woraus sich, in Abhängigkeit vom Einsatzgebiet, unter anderem eine vielfach erhöhte Katalysatoraktivität ergibt.

Das auf diese Weise erhaltene Ausgangsprodukt kann für eine breite Palette von Anwendungsfällen verwendet werden, von denen nachfolgend einige beschrieben sind.

Es wurde eine biologische Prüfung des nach dem erfindungsgemäßen Verfahren wie vorangehend beschrieben hergestellten Kupferhydroxids im Hinblick auf seine fungizide Wirksamkeit an Kulturen von Wein (gegen Peronospora) und Kartoffeln (gegen Phytophthora) durchgeführt. Dabei zeigte sich, daß gegenüber dem auf bekannte Weise hergestellten Kupferhydroxid Aufwandmengen von lediglich einem Zehntel bis zu einem Fünfundzwanzigstel - bezogen auf die Kupfermenge - erforderlich waren, um die gleiche Wirksamkeit wie die herkömmlichen Produkte zu erzielen.

In einem weiteren Anwendungsfall wurde beim Tauchen von unbehandeltem trockenen Holz in eine herkömmliche Kupferhydroxid-Suspension das Kupferhydroxid nur oberflächlich fixiert; die gemessene Eindringtiefe betrug weniger als ein Millimeter. Beim Tauchen gleichartigen Holzes in die nach dem erfindungsgemäßen Verfahren hergestellte Kupferhydroxid-Miniemulsion wurde das Kupferhydroxid in einer Eindringtiefe von mehr als10 mm nachgewiesen.

Die Leachingrate des nach dem oben beschriebenen Verfahren hergestellten Produktes, eingesetzt in einer standardisierten Antifouling-Schiffsfarbe, unterscheidet sich deutlich von der Leachingrate einer Schiffsfarbe mit konventionell hergestellten Kupfersalz. Während im Test nach ISO 15181-1 die Leachingrate für ein Produkt aus konventionell hergestelltem Kupfersalz 2 mg/m$^2$/Tag betrug, wurde für ein unter Verwendung des nach dem hier beschriebenen Ausführungsbeispiel hergestellten Kupfersalzes erhaltenes Produkt eine Leachingrate von 0,1 mg/m$^2$/Tag gemessen.

Bei einer Zudotierung von 5 % Zink zu der nach dem oben beschriebenen Ausführungsbeispiel hergestellten Substanz entstanden Blättchenstrukturen, die eine Erhöhung der Haftungswirkung auf Oberflächen, im Falle von Pflanzen auf Blatt- und Fruchtoberflächen, bewirkten und die damit einen längeren pflanzenschützenden, beispielsweise fungiziden, Effekt erzielen können.

Eine Zudotierung von 5 Gewichtsprozent Phosphat zur gleichen Ausgangssubstanz ergab eine Blockierung des Oberflächeneffektes der entstandenen Nanometerpartikel. Dadurch ist die Oberfläche gegenüber Umwelteinflüssen stabil, was zu einer wesentlich länger anhaltenden Wirkung führt.

Schließlich führte eine Zudotierung von 5 Gewichtsprozent Carbonat zur obigen Ausgangssubstanz zu Partikeln, deren Haftung auf Oberflächen praktisch vollständig aufgehoben war. Die Nanopartikel liefen auf einer Oberfläche völlig zusammen und bildeten ein größeres Partikel im Mikrometer-Bereich. Diese Eigenschaft kann beispielsweise bei Spezialfarben vorteilhaft ausgenutzt werden.

Zur Erzielung einer stabilisierenden Wirkung bei den erfindungsgemäß hergestellten Miniemulsion sind grundsätzlich alle bekannten Blockpolymere einsetzbar, die aus hydrophoben und hydrophilen Teilen bestehen. Dabei müssen die Blocklängen so eingestellt sein, daß ein inverses Tensid entsteht, d.h. ein Tensid, das polare Teilchen in einem unpolaren Dispersionsmittel dispergiert. Dies bedeutet, daß sich der hydrophobe Teil im Dispersionsmittel löst und der hydrophile Teil mit der Oberfläche des Ausgangsproduktes in Wechselwirkung tritt.

Beispiele für solche bekannten Blockpolymere sind :

- Poly(ethylen-co-butylen)-b-polyethylenoxid,
- Poly(propylenoxid)-b-polyethylenoxid,
- Poly(m-alkyl)(meth)acrylat-b-poly(meth)acrylsäure.

Die Polymere haben dabei eine molare Masse von ca. 3000 g/mol und somit eine Größe, bei der sie gerade stabil sind.

Wichtig bei dem Verfahren gemäß der Erfindung ist, daß die Partikel nicht vollständig mit Tensid umhüllt und nur zu einem geringen Teil mit Blockpolymeren abgedeckt sind. Der hydrophile Teil der Tenside liegt auf der Oberfläche der Partikel, während der hydrophobe Teil igelartig in das Dispersionsmittel hineinragt. Dieser geringe Bedeckungsgrad stellt insofern einen wichtigen Vorteil dar, als nur geringe Mengen an Tensid eingesetzt werden müssen. Ein weiterer Vorteil ist darin zu sehen, daß zur Durchführung des vorangehend beschriebenen Verfahrens Blockpolymere verwendet werden können, die biologisch nicht persistent sind und die damit auch nicht, beispielsweise mit im Boden vorhandenen Metallen, in unerwünschte Wechselwirkungen treten können.

## Patentansprüche

1. Verfahren zur Herstellung von Kupfersalzen aus wenigstens je einem kupferhaltigen und einem weiteren Reaktanden, **dadurch gekennzeichnet, daß** aus den Reaktanden unter Verwendung wenigstens eines Blockpolymers Miniemulsionen hergestellt werden und daß die so erhaltenen Zwischenprodukte vermischt und zur Bildung einer Miniemulsion miteinander zur Reaktion gebracht werden.

2. Verfahren nach Anspruch 1, **dadurch gekennzeichnet, daß** die Herstellung der Zwischenprodukte sowie die anschließende gemeinsame Reaktion mittels Ultraschall erfolgen.

3. Verfahren nach Anspruch 1, **dadurch gekennzeichnet, daß** die Herstellung der Zwischenprodukte sowie die anschließende gemeinsame Reaktion in einem Hochdruckhomogenisator durchgeführt werden.

4. Verfahren nach einem der Ansprüche 1 bis 3, **dadurch gekennzeichnet, daß** eine Reaktion von löslichen Salzen mit Laugen zur Erzeugung einer basischen Kupferverbindung erfolgt.

5. Verfahren nach Anspruch 4, **dadurch gekennzeichnet, daß** das lösliche Salz aus Kupferchlorid (CuCl$_2$) besteht.

6. Verfahren nach Anspruch 4, **dadurch gekennzeichnet, daß** das lösliche Salz aus Kupfernitrat (Cu(NO)$_3$) besteht.

7. Verfahren nach einem der Ansprüche 1 bis 3, **dadurch gekennzeichnet, daß** ein Zwischenprodukt als disperses Agglomerat vorliegt.

**8.** Verfahren nach Anspruch 7, **dadurch gekennzeichnet, daß** das Agglomerat als festes Kupferhydroxid/Natrium-chlorid-(Cu(OH)$_2$/NaCl-) Agglomerat ausgebildet ist und zur Herstellung von Kupfer-(I)-oxid (Cu$_2$O) in einer Mehr-phasenreaktion von zweiwertigem Kupfer (Cu$^{2+}$) zu einwertigem Kupfer (Cu$^+$) reduziert wird.

**9.** Verfahren nach einem der Ansprüche 1 bis 8, **dadurch gekennzeichnet, daß** als Blockpolymer Polyethylenoxid-Blockpolymer verwendet wird.

**10.** Verfahren nach einem der Ansprüche 1 bis 8, **dadurch gekennzeichnet, daß** das Blockpolymer aus Poly(ethylenco-butylen)-b-polyethylenoxid besteht.

**11.** Verfahren nach einem der Ansprüche 1 bis 8, **dadurch gekennzeichnet, daß** das Blockpolymer aus Poly(propylenoxid)-b-polyethylenoxid besteht.

**12.** Verfahren nach einem der Ansprüche 1 bis 8, **dadurch gekennzeichnet, daß** das Blockpolymer aus Poly(malkyl) (meth)acrylat-b-poly(meth)acrylsäure besteht.

**13.** Verfahren nach einem der Ansprüche 1 bis 12, **dadurch gekennzeichnet, daß** der Mischung der Zwischenprodukte Fremdionen zudotiert werden.

**14.** Verfahren nach Anspruch 13, **dadurch gekennzeichnet, daß** der Anteil der Fremdionen wenigstens etwa 5 Gewichtsprozent beträgt.

**15.** Verfahren nach Anspruch 13 oder 14, **dadurch gekennzeichnet, daß** eine Zudotierung von Zink erfolgt.

**16.** Verfahren nach Anspruch 13 oder 14, **dadurch gekennzeichnet, daß** eine Zudotierung von Phosphat erfolgt.

**17.** Verfahren nach Anspruch 13 oder 14, **dadurch gekennzeichnet, daß** eine Zudotierung von Carbonat erfolgt.

**18.** Kupfersalz, hergestellt nach dem Verfahren gemäß einem der Ansprüche 1 bis 17, **dadurch gekennzeichnet, daß** die Größe der Primärteilchen unterhalb von 50 Nanometern liegt.

**19.** Kupfersalz gemäß Anspruch 18, **dadurch gekennzeichnet, daß** die Größe der Primärteilchen zwischen 5 und 20 Nanometern liegt.

**20.** Kupfersalz gemäß Anspruch 18, **dadurch gekennzeichnet, daß** es einen Zusatz eines Fremdions aufweist.

**21.** Kupfersalz gemäß Anspruch 20, **dadurch gekennzeichnet, daß** der Anteil an Fremdionen etwa 5 Gewichtsprozent beträgt.

**22.** Kupfersalz gemäß Anspruch 20 oder 21, **dadurch gekennzeichnet, daß** die Fremdionen aus Zink bestehen.

**23.** Kupfersalz gemäß 20 oder 21, **dadurch gekennzeichnet, daß** die Fremdionen aus Phosphat bestehen.

**24.** Kupfersalz gemäß Anspruch 20 oder 21, **dadurch gekennzeichnet, daß** die Fremdionen aus Carbonat bestehen.

**Europäisches Patentamt**

# EUROPÄISCHER RECHERCHENBERICHT

Nummer der Anmeldung

EP 02 01 8881

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| P,X | WO 01 94263 A (CHANE CHING JEAN YVES ;ANTHONY OLIVIER (FR); GERARDIN CORINE (FR);) 13. Dezember 2001 (2001-12-13) * Seite 1, Zeile 15 - Seite 2, Zeile 18 * * Seite 4, Zeile 7-10 * * Seite 5, Zeile 5-9 * * Beispiele 2-4 * | 1,4,5, 7-9,12, 18 | C01G3/00 C01G3/02 |
| X | DE 195 06 113 A (MAX PLANCK GESELLSCHAFT) 29. August 1996 (1996-08-29) * Seite 2, Zeile 25 - Seite 3, Zeile 30 * | 1-8,18, 19 | |
| A | KUMAR P ET AL: "PREPARATION OF YBA2CU307-X SUPERCONDUCTOR BY COPRECIPITATION OF NANOSIZE OXALATE PRECURSOR POWDER IN MICROEMULSIONS" MATERIALS LETTERS, NORTH HOLLAND PUBLISHING COMPANY. AMSTERDAM, NL, Bd. 16, Nr. 2 / 3, 1. März 1993 (1993-03-01), Seiten 68-74, XP000355180 ISSN: 0167-577X * das ganze Dokument * | 1-12,18, 19 | |
| A | WO 89 05336 A (BATTELLE MEMORIAL INSTITUTE) 15. Juni 1989 (1989-06-15) * Seite 2, Zeile 33 - Seite 5, Zeile 2 * * Beispiel 1 * | 1-12,18, 19 | |
| A | WO 00 10913 A (BROOS JACQUES A F ;VOORST RONALD VAN (NL); GRUENBAUER HENRI J M (N) 2. März 2000 (2000-03-02) * Seite 2, Zeile 3 - Seite 3, Zeile 6 * * Seite 4, Zeile 9-31 * | 1-12 | |

RECHERCHIERTE SACHGEBIETE (Int.Cl.7)

C01G

Der vorliegende Recherchenbericht wurde für alle Patentansprüche erstellt

| Recherchenort | Abschlußdatum der Recherche | Prüfer |
|---|---|---|
| MÜNCHEN | 3. Februar 2003 | Besana, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

ANHANG ZUM EUROPÄISCHEN RECHERCHENBERICHT
ÜBER DIE EUROPÄISCHE PATENTANMELDUNG NR.　EP 02 01 8881

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-02-2003

| Im Recherchenbericht angeführtes Patentdokument | | Datum der Veröffentlichung | Mitglied(er) der Patentfamilie | | Datum der Veröffentlichung |
|---|---|---|---|---|---|
| WO 0194263 | A | 13-12-2001 | US | 6500871 B1 | 31-12-2002 |
| | | | AU | 6761501 A | 17-12-2001 |
| | | | WO | 0194263 A2 | 13-12-2001 |
| DE 19506113 | A | 29-08-1996 | DE | 19506113 A1 | 29-08-1996 |
| | | | WO | 9626004 A1 | 29-08-1996 |
| WO 8905336 | A | 15-06-1989 | AT | 101186 T | 15-02-1994 |
| | | | AT | 191739 T | 15-04-2000 |
| | | | CA | 1337750 A1 | 19-12-1995 |
| | | | CA | 1333316 A1 | 29-11-1994 |
| | | | CA | 1337235 A1 | 10-10-1995 |
| | | | DE | 3856403 D1 | 18-05-2000 |
| | | | DE | 3856403 T2 | 26-10-2000 |
| | | | DE | 3887681 D1 | 17-03-1994 |
| | | | DE | 3887681 T2 | 11-05-1994 |
| | | | EP | 0343233 A1 | 29-11-1989 |
| | | | EP | 0395714 A1 | 07-11-1990 |
| | | | EP | 0387307 A1 | 19-09-1990 |
| | | | JP | 3503180 T | 18-07-1991 |
| | | | WO | 8904858 A1 | 01-06-1989 |
| | | | WO | 8904844 A1 | 01-06-1989 |
| | | | WO | 8905336 A1 | 15-06-1989 |
| | | | US | 5238671 A | 24-08-1993 |
| | | | US | 4933404 A | 12-06-1990 |
| | | | US | 5158704 A | 27-10-1992 |
| | | | JP | 2702579 B2 | 21-01-1998 |
| | | | JP | 3503023 T | 11-07-1991 |
| | | | US | 5266205 A | 30-11-1993 |
| WO 0010913 | A | 02-03-2000 | AU | 5570799 A | 14-03-2000 |
| | | | BR | 9913381 A | 22-05-2001 |
| | | | CA | 2340096 A1 | 02-03-2000 |
| | | | CN | 1313832 T | 19-09-2001 |
| | | | EP | 1112223 A1 | 04-07-2001 |
| | | | JP | 2002523618 T | 30-07-2002 |
| | | | TR | 200100553 T2 | 23-07-2001 |
| | | | TW | 458827 B | 11-10-2001 |
| | | | WO | 0010913 A1 | 02-03-2000 |

EPO FORM P0461

Für nähere Einzelheiten zu diesem Anhang : siehe Amtsblatt des Europäischen Patentamts, Nr.12/82